# FASCICULE DE BREVET EUROPEEN

(11) **EP 0 575 206 B1**
(45) Date de publication et mention de la délivrance du brevet: **26.10.1994**
(21) Numéro de dépôt: 93401087.7
(22) Date de dépôt: 27.04.1993
(51) Int. Cl.: H01S 3/03, H01S 3/034, B23K 26/02, B23K 26/10

(54) **Appareil laser de puissance à mélange gazeux**
Hochleistungs-Gasgemisch-Laserapparat
High-power gas mixture laser apparatus

(30) Priorité: 19.06.1992 FR 9207487
(43) Date de publication de la demande: 22.12.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Marie, Bruno, F-78310 Maurepas (FR); Guerin, Daniel, F-77500 Chelles (FR); Larquet, Christian, F-78280 Guyancourt (FR)
(74) Mandataire: Le Moenner, Gabriel

(56) Documents cités:
- US-A- 3 895 313
- APPLIED PHYSICS LETTERS vol. 17, no. 9, 1 Novembre 1970, NEW YORK US pages 388- 391 C.O. BROWN 'HIGH-POWER CO2 DISCHARGE MIXING LASER'
- IEEE JOURNAL OF QUANTUM ELECTRONICS. vol. QE-15, no. 6, Juin 1979, NEW YORK USpages 487 - 490 M.E.MARHIC ET AL. 'WHISPERING-GALLERY CO2 LASER'
- IEEE JOURNAL OF QUANTUM ELECTRONICS. vol. QE-17, no. 7, Juillet 1981, NEW YORK, US; pages 1166-1181; P.W.SMITH: "TRANSVERSELY EXCITED WAVEGUIDE GAS LASER"
- APPLIED OPTICS vol. 28, no. 10, 15 Mai 1989, NEW YORK US pages 1897 - 1903 F.S.AL-MASHAABI ET AL. 'DIRECT CURRENT EXCITED CW CO2 METAL WAVEGUIDE LASER'

## Description

La présente invention concerne les appareils laser de puissance à mélange, du type comprenant un générateur de décharge fournissant un flux d'azote excité à une cavité résonnante, et des moyens interposés entre la cavité résonnante et la sortie du générateur pour introduire un flux de CO₂ (dioxyde de carbone) dans le flux d'azote excité.

Un appareil laser CO₂ à mélange de ce type est décrit dans l'Article "High Power CO₂ electric discharge mixing laser" de C.O. Brown dans Applied Physics Letters, vol. 17, N° 9, novembre 1970. Quoique de tels lasers EDML soient décrits depuis longtemps, ils n'ont pas connu de développements industriels, en raison notamment de leur fonctionnement à pression très basse, aux mauvais choix de générateurs d'espèces excitées et à l'utilisation préconisée d'hélium. D'autre part, les lasers CO₂ de puissance, en général, connaissent une diffusion plutôt restreinte à l'échelle industrielle en raison de leur prix élevé et de leur fiabilité insuffisante, essentiellement au niveau des composants optiques mais également en raison de problèmes de fuites, et aussi du fait qu'il n'existe pas de fibres optiques susceptibles de transmettre une forte puissance à la longueur d'onde de 10 microns de ces lasers.

La présente invention a pour objet de proposer un appareil laser de puissance à mélange à usage industriel de coût réduit, à fiabilité grandement accrue et permettant, sous une forme compacte, de délivrer des puissances importantes, pouvant dépasser le kW.

Pour ce faire, selon une caractéristique de l'invention, le générateur de flux d'azote excité est du type à décharge électrique froide fonctionnant à une pression supérieure à 0,3 x 10⁵ Pa, et est couplé à la cavité résonnante constituée par un guide d'onde à miroirs opposés suivant une direction principale du guide d'onde.

Par "décharge électrique froide", on entend la formation d'espèces excitées dans un mélange gazeux, la température des espèces électriquement neutres du mélange gazeux n'excédant pas 250°C, plus généralement 150°C. Ce type de décharge est également appelée, selon les auteurs, par exemple "décharge couronne", "Atmospheric Pressure Glow Discharge", "Barrier Discharge" ou encore "Silent Discharge".

Selon d'autres caractéristiques de l'invention :
- le générateur comprend une chambre de décharge tubulaire à circulation de gaz transversale par rapport à l'axe de la chambre ;
- la direction principale du guide d'onde est sensiblement parallèle à l'axe de la chambre ;
- le CO₂ est introduit dans un passage de gaz parallèle audit axe ;
- le guide d'onde est du type à galerie chuchotante et a une forme de gouttière arquée à grand rayon de courbure et ayant une direction principale sensiblement parallèle audit axe ;
- au moins un des miroirs comprend au moins une lame en diamant.

La structure et les propriétés d'une galerie chuchotante (en anglais "whispering gallery") comme guide d'onde sont décrites dans le document US-A-4.194.808, Marhic et al. L'utilisation comme laser d'une telle galerie chuchotante est décrite dans l'Article "Whispering gallery CO₂-laser" de Marhic et al dans IEEE Journal of Quantum Electronics, vol. QE-15, N° 6, de juin 1979. Les lasers CO₂ à galerie chuchotante se sont jusqu'à présent trouvés confrontés à des problèmes de durée de vie, tenant notamment aux dégradations provoquées par les décharges électriques dans la zone de propagation du faisceau, et de puissance, limitée par le volume du milieu amplificateur.

L'agencement selon la présente invention permet d'éviter les problèmes ci-dessus, le concept du laser à mélange et l'excitation du flux d'azote dans un générateur du type à décharge froide à pression relativement élevée permettant d'obtenir un gain très élevé en continu. Par ailleurs, avec un laser à mélange, on dispose d'un flux de gaz considérable pour balayer les miroirs du guide d'onde, ce qui empêche les particules de s'y déposer et de créer des points chauds entraînant leur détérioration rapide. L'utilisation de miroirs en diamant permet d'autre part de supprimer quasiment les problèmes de durée de vie de ces derniers. Qui plus est, le réglage des miroirs dans un laser à guide d'onde de faible longueur n'est pas critique, ce qui est encore plus vrai avec une galerie chuchotante : une variation de 2° de l'orientation des miroirs n'engendre aucune modification de puissance et le laser reste mono-mode même avec un désalignement de 1°. Le mode d'une galerie chuchotante reste petit, de l'ordre de 1 mm², même avec un rayon de courbure très grand de la galerie. Pour un faisceau d'1 kW, la densité de puissance intra-cavité est supérieure à 200 kW/cm₂, ce qui est parfaitement tolérable pour un miroir en diamant.

Selon d'autres caractéristiques de l'invention :
- le gaz alimentant le générateur comprend au moins 78 % d'azote, et est typiquement un mélange d'azote et d'oxygène, par exemple avec une teneur en oxygène d'environ 5 %, le mélange gazeux étant alors avantageusement fourni par traitement de l'air par un dispositif à adsorption et/ou perméation ;
- l'appareil comporte des moyens pour introduire dans le mélange gazeux un gaz choisi dans le groupe constitué de l'hélium, de l'hydrogène et de la vapeur d'eau.

La présente invention a pour autre objet de proposer un appareil industriel du type défini ci-dessus pour la découpe de matériaux, caractérisé en ce qu'il est couplé en sortie à une galerie chuchotante multi-spires terminée par une tête de focalisation, en exploitant ainsi au mieux les propriétés des galeries chuchotantes.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue schématique illustrant l'agencement de principe d'un appareil selon l'invention ;
- la figure 2 est une vue schématique en coupe transversale d'un appareil selon l'invention ;
- la figure 3 est une vue schématique partielle d'un mode de réalisation de l'invention ;
- la figure 4 est une vue analogue à la figure 2 montrant un autre mode de réalisation de l'invention ;
- les figures 5 et 6 sont des vues schématiques de cavités de correction de dissymétrie de faisceau ; et
- la figure 7 est une vue schématique d'un appareil industriel pour la découpe de matériaux selon l'invention.

Dans la description qui va suivre et sur les dessins, les éléments identiques ou analogues portent les mêmes chiffres de référence.

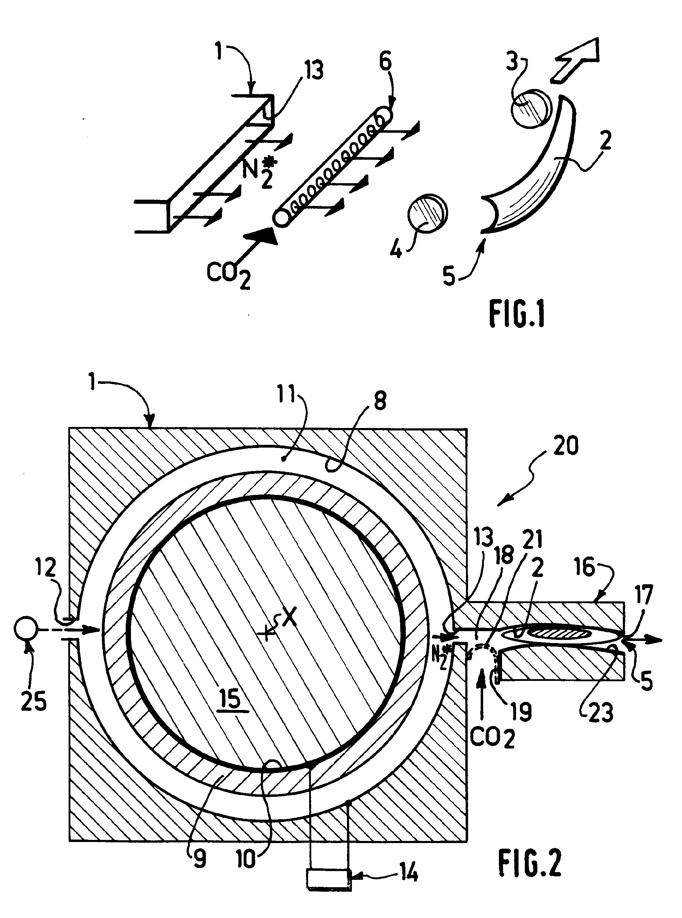

Comme on le voit sur la figure 1, un appareil selon l'invention comprend un générateur de décharge 1 délivrant en sortie un flux de gaz comprenant des molécules d'azote excitées fourni à une cavité résonnante constituée par un guide d'onde, par exemple un tronçon de galerie chuchotante 2 en forme de gouttière arquée ayant un rayon de courbure principal supérieur à 1 m et pourvu à ses extrémités opposées d'un miroir réfléchissant 3 et d'un miroir ou fenêtre 4 de transmission du faisceau laser. Un flux de CO₂ est mélangé au flux contenant l'azote excité par un dispositif d'injection 6 interposé entre la cavité résonnante 5 et la sortie du générateur 1. Le générateur 1 est agencé pour produire, via un passage de sortie allongé 13, un flux de gaz homogène transversalement au guide d'onde 2, lequel présente une forme de gouttière ayant une direction principale sensiblement parallèle au passage de sortie 13.

Dans le mode de réalisation représenté sur la figure 2, le générateur 1 est tel que décrit dans la demande de brevet français N° 92.07486 au nom de la Demanderesse, et comprend essentiellement, dans un bloc métallique, une électrode périphérique tubulaire 8 d'axe X entourant concentriquement un tube diélectrique 9 coaxial sur la face intérieure duquel est appliquée une électrode intérieure 10 et ménageant, avec l'électrode périphérique 8, un passage tubulaire de gaz 11 coaxial au tube diélectrique 9 et débouchant vers l'extérieur du bloc par une entrée 12 et une sortie 13 en forme de fentes, parallèles à l'axe X du passage 11, diamétralement opposées et ayant une hauteur n'excédant pas l'épaisseur radiale du passage tubulaire 11. Les électrodes 8 et 10 sont reliées à un générateur haute tension et haute fréquence 14. L'électrode intérieure 10 délimite un volume interne dans lequel circule un fluide de refroidissement 15, par exemple de l'eau ou un Fréon.

Selon l'invention, dans le mode de réalisation de la figure 1, l'appareil 20 est complété par un bloc 16 accolé au bloc générateur 1 définissant un logement longitudinal ayant une hauteur d'environ 1 mm et dans lequel est disposée la galerie chuchotante 2 avec le fond de la gouttière sensiblement parallèle au plan diamétral des entrée et sortie 12 et 13, avec un passage latéral de sortie de gaz 17 et un passage d'entrée de gaz 18 parallélépipédique prolongeant la sortie 13 du bloc 1 et dans lequel débouche transversalement un passage parallélépipédique 19 permettant l'introduction de CO₂ dans l'entrée 18, via par exemple une grille d'homogénéisation 21 pour mélanger le CO₂ avec le flux gazeux contenant l'azote excité, ce dernier transférant son énergie au CO₂ avant introduction dans la cavité laser en excitant exclusivement le niveau supérieur de la transition laser.

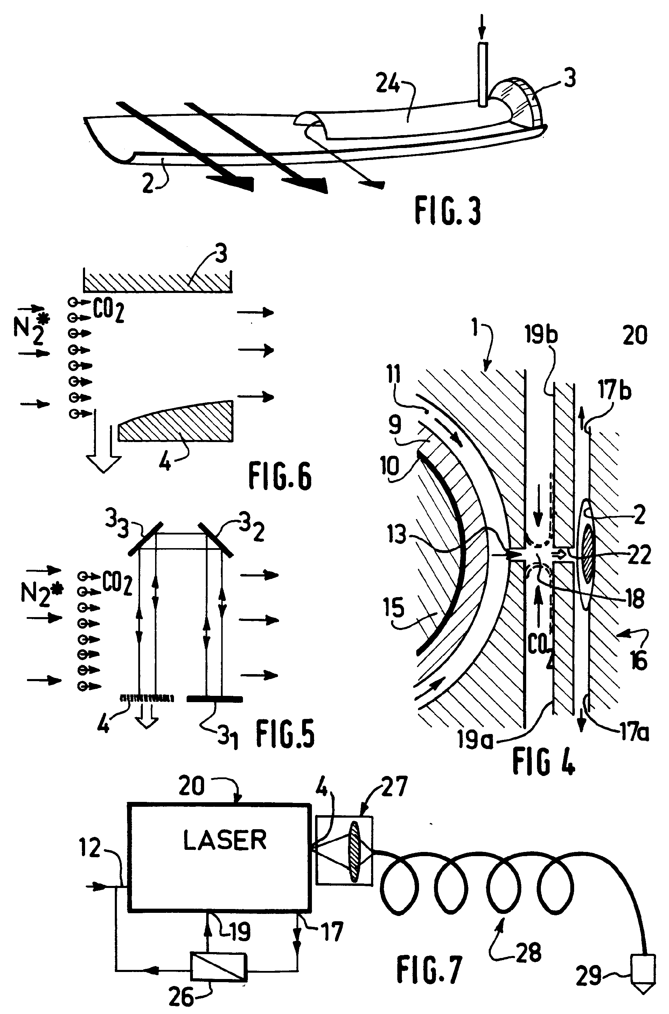

Le faisceau laser, représenté schématiquement sur la figure 2, est elliptique et a une polarisation linéaire. Le gaz entrant par un côté riche en énergie vibrationnelle et sortant vidé de cette énergie, le faisceau est dissymétrique suivant la direction du flux gazeux transversalement à la galerie 2 (axe Z). Pour annuler cette dissymétrie, on peut adopter l'agencement de la figure 4, autorisé par le guidage optique unilatéral de la galerie chuchotante, c'est-à-dire avec cette dernière placée verticalement face à l'extrémité aval 22 du passage de gaz 18 en regard du passage de sortie 13 du corps 1, les arrivées de CO₂ étant alors avantageusement symétriques, 19A, 19B, de même que les passages de sortie de gaz 17A, 17B. On peut également utiliser une cavité dite repliée avec trois miroirs réfléchissants 3ᵢ dont deux (3₂, 3₃) inclinés (fig. 5), une cavité instable, avec un miroir (4) profilé et ménageant une ouverture d'échappement (fig. 6) ou un guide d'onde ayant au moins une surface de guidage poreux permettant l'injection d'un flux gazeux traversant la surface. D'autre part, dans le mode de réalisation de la figure 2, pour garantir qu'une partie substantielle des espèces excitées passe dans la zone contenant les photons, on peut prévoir la paroi inférieure 23 du logement de la galerie 2 avec des indentations orientées favorisant ainsi la formation d'un écoulement extrêmement turbulent dans le logement.

Selon un aspect de l'invention, les miroirs 3 et 4 aux extrémités de la galerie chuchotante 2 sont constitués d'au moins une lame en diamant C-II-A revêtue ou non revêtue, comme décrit par exemple dans la demande de brevet français N° 92.02437 au nom de la Demanderesse. Comme on le voit sur la figure 3, qui représente un guide d'onde constitué d'une galerie chuchotante 2, si l'on ne souhaite pas utiliser le flux de mélange gazeux traversant le guide d'onde 2 pour effectuer un balayage des miroirs 3 et/ou 4, on balaie ces derniers par un débit de gaz auxiliaire filtré acheminé dans un capotage 24 disposé au voisinage du miroir 3 et de dimensions légèrement supérieures à celles du mode laser.

Le gaz introduit dans le générateur 1, en provenance d'une source de gaz 25, à une pression entre 0,3 x 10⁵ Pa et 3 x 10⁵ Pa, avantageusement d'environ 0,5 x 10⁵ Pa ou, pour un fonctionnement simplifié, à la pression atmosphérique, est un mélange gazeux contenant au moins 78 % d'azote, et typiquement de l'oxygène, par exemple de l'air. L'hélium, généralement utilisé en forte proportion dans les lasers à mélange, n'est pas ici nécessaire. L'hélium a en effet pour fonction de stabiliser la décharge et de désexciter le niveau inférieur de la transition laser. L'effet stabilisateur est ici sans objet grâce à l'utilisation de la décharge froide dans le générateur 1. La désexcitation peut être assurée par adjonction, avantageusement au niveau de la zone d'introduction de CO₂, d'hydrogène ou de vapeur d'eau, introduit dans un flux de gaz vecteur, par exemple, qui sont à cet égard beaucoup plus efficaces que I'hélium. L'hydrogène et la vapeur d'eau désexcitant aussi le niveau supérieur de la transition laser, il est nécessaire que leur concentration soit définie avec précision. La quantité d'hydrogène ne doit ainsi pas dépasser 2 ou 3 % du débit total de gaz, l'hydrogène étant de préférence introduit avec le CO₂ en aval du générateur pour éviter la désexcitation de l'azote. La quantité de vapeur d'eau mélangée au CO₂ ne doit pas excéder 10 000 ppm.

On peut alimenter le générateur 1 avec de l'azote contenant une faible quantité d'oxygène, supérieure à 1 %,, obtenu avantageusement par adsorption ou perméation de l'air, ce qui permet de diminuer grandement le coût de l'azote. En effet, le rendement du générateur à décharge couronne 1 n'est que très légèrement diminué, par rapport à l'azote sensiblement pur, avec de l'azote contenant 5 % d'oxygène. L'oxygène contenu dans l'azote sera partiellement transformé dans le générateur 1 en ozone, lequel pourra être efficacement détruit par de l'hydrogène mélangé au CO₂, en produisant de l'eau. Dans le cas où le générateur est alimenté par de l'air, la pression dans le générateur 1 est avantageusement d'environ 0,5 x 10⁵ Pa et l'air d'alimentation est épuré en eau de sorte que la teneur en eau n'excède pas 5000 ppm et soit de préférence inférieure à 100 ppm. Entre 100 et 5000 ppm, la teneur en eau doit être maintenue constante. Pour un débit d'air sélectionné, à la pression de 0,5 x 10⁵ Pa, les débits de CO₂ et d'hydrogène introduits en aval sont respectivement, dans un mode préféré, entre 10 et 30 % et entre 0,5 et 1 % du débit d'air.

Pour limiter les consommations des différents gaz, on prévoira avantageusement, comme représenté sur la figure 7, un circuit de recyclage des gaz faisant passer le mélange gazeux déchargé à la sortie 17 dans un dispositif de perméation à membrane 26 permettant de récupérer le CO₂, l'hélium ou l'hydrogène, réintroduits en 19, et éventuellement, pour réinjection à l'entrée 12, un azote purifié. Sur cette même figure 7, on a représenté un appareil complet pour la découpe de matériaux. Le faisceau laser quittant le miroir 4 du laser 20 est adressé, via un système de couplage 27, à une galerie chuchotante multi-spires flexible 28 comportant, à son extrémité libre, un système de focalisation 29 déplaçable indépendamment du laser 20 pour suivre des profils de découpe.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Appareil laser de puissance à mélange, comprenant un générateur de décharge (1) fournissant un flux d'azote excité à une cavité résonnante (5), et des moyens (6 ; 19) interposés entre la cavité résonnante (5) et la sortie du générateur (1) pour introduire un flux de CO₂ dans le flux d'azote excité, caractérisé en ce que le générateur (1) est du type à décharge électrique froide couronne fonctionnant à une pression supérieure à 0,3 x 10⁵ Pa, et est couplé à la cavité résonnante (5) constituée par un guide d'onde (2) à miroirs (3, 4) opposés suivant une direction principale du guide d'onde.

2. Appareil selon la revendication 1, caractérisé en ce que le générateur (1) comprend une chambre de décharge tubulaire (11) ayant un axe (X) et à circulation de gaz transversale par rapport à l'axe (X).

3. Appareil selon la revendication 1 ou la revendication 2, caractérisé en ce que la direction principale du guide d'onde (2) est parallèle à l'axe (X).

4. Appareil selon la revendication 3, caractérisé en ce que le CO₂ est introduit par au moins un passage de gaz (18) parallèle à l'axe (X).

5. Appareil selon l'une des revendications 2 à 4, caractérisé en ce que le guide d'onde (2) a une forme de gouttière arquée à grand rayon de courbure et ayant une direction principale sensiblement parallèle à l'axe (X).

6. Appareil selon la revendication 5, caractérisé en ce que le fond de la gouttière (2) est agencé sensiblement parallèlement au flux de mélange de gaz dans le passage (18).

7. Appareil selon la revendication 5, caractérisé en ce que le fond de la gouttière (2) est agencé sensiblement perpendiculairement au flux du mélange de gaz dans le passage (18).

8. Appareil selon l'une des revendications précédentes, caractérisé en ce qu'au moins un des miroirs (3 ;4) comprend au moins une lame en diamant.

9. Appareil selon l'une des revendications précédentes, caractérisé en ce que le gaz (25) alimentant le générateur (1) comprend au moins 78 % d'azote.

10. Appareil selon la revendication 9, caractérisé en ce que la teneur en vapeur d'eau dans le gaz (25) alimentant le générateur (1) n'excède pas 5000 ppm.

11. Appareil selon l'une des revendications précédentes, caractérisé en ce qu'il comporte des moyens pour introduire dans le mélange gazeux fourni au guide d'onde (2) un gaz choisi dans le groupe constitué de I'hélium, l'hydrogène et la vapeur d'eau.

12. Appareil selon la revendication 11, caractérisé en ce que la teneur en hydrogène dans le mélange gazeux n'excède pas 3 % en volume.

13. Appareil selon la revendication 11, caractérisé en ce que la teneur en vapeur d'eau dans le mélange gazeux fourni au guide d'onde (2) n'excède pas 10 000 ppm.

14. Appareil selon l'une des revendications 9 à 13, caractérisé en ce que le gaz (25) alimentant le générateur (1) comprend environ 5 % d'oxygène.

15. Appareil selon l'une des revendications précédentes, caractérisé en ce que la pression du gaz (25) alimentant le générateur (1) est d'environ 0,5 x 10⁵ Pa.

16. Appareil selon l'une des revendications 1 à 14, caractérisé en ce que la pression du gaz (25) alimentant le générateur (1) est d'environ 1 x 10⁵ Pa.

17. Appareil selon l'une des revendications précédentes, caractérisé en ce qu'il comprend un circuit de recyclage du mélange de gaz quittant (17) le guide d'onde (2), et incluant un dispositif (26) de séparation de CO₂ et d'azote.

18. Appareil selon l'une des revendications précédentes, pour la découpe de matériaux, caractérisé en ce qu'il est couplé à une galerie chuchotante multi-spires (28) terminée par une tête de focalisation (29).

## Patentansprüche

1. Hochleistungsgasgemisch-Laserapparat mit einem Entladungsgenerator (1) der einen Strom angeregten Stickstoffs zu einem Resonanzraum (5) überführt, und mit einer zwischen dem Resonanzraum (5) und dem Auslaß des Generators angeordneten Einrichtung (6; 19) zum Einführen des CO₂-Stroms in den Strom angeregten Stickstoffs, dadurch gekennzeichnet, daß der Generator (1) ein elektrischer Koronagenerator mit Kaltentladung ist, der mit einem Druck von mehr als 0,3 x 10⁵ Pa arbeitet und mit dem Resonanzraum verbunden ist, der aus einem Hohlleiter (2) mit Spiegeln (3, 4) besteht, die in der Hauptrichtung des Hohlleiters einander gegenüberliegend angeordnet sind.

2. Apparat nach Anspruch 1, dadurch gekennzeichnet, daß der Generator (1) eine rohrförmige Entladungskammer (11) umfaßt, die eine Achse X und einen in Bezug auf die Achse X querverlaufenden Gasumlauf hat.

3. Apparat nach Anspruch 1 oder 2, dadurch gekennzeichnet, daß die Hauptrichtung des Hohlleiters (2) parallel zur Achse X verläuft.

4. Apparat nach Anspruch 3, dadurch gekennzeichnet, daß das CO₂ über zumindest einen parallel zur Achse X verlaufenden Gasdurchlaß (18) eingeleitet wird.

5. Apparat nach einem der Ansprüche 2 bis 4, dadurch gekennzeichnet, daß der Hohlleiter (2) die Gestalt einer gebogenen Rinne mit großem Krümmungsradius und eine im wesentlichen parallel zur Achse X verlaufende Hauptrichtung hat.

6. Apparat nach Anspruch 5, dadurch gekennzeichnet, daß der Boden der Rinne (2) im wesentlichen parallel zum Gasgemischstrom im Durchlaß (18) angeordnet ist.

7. Apparat nach Anspruch 5, dadurch gekennzeichnet, daß der Boden der Rinne (2) im wesentlichen lotrecht zum Gasgemischstrom im Durchlaß (18) angeordnet ist.

8. Apparat nach einem der vorangehenden Ansprüche, dadurch gekennzeichnet, daß zumindest einer der Spiegel (3, 4) zumindest eine dünne Diamantscheibe umfaßt.

9. Apparat nach einem der vorangehenden Ansprüche, dadurch gekennzeichnet, daß das den Generator (11) speisende Gas (25) zumindest 78 % Stickstoff umfaßt.

10. Apparat nach Anspruch 9, dadurch gekennzeichnet, daß der Wasserdampfgehalt des den Generator (1) speisenden Gases (25) 5000 ppm nicht übersteigt.

11. Apparat nach einem der vorangehenden Ansprüche, dadurch gekennzeichnet, daß er eine Einrichtung zum Einleiten eines aus der aus Helium, Wasserstoff und Wasserdampf bestehenden Gruppe ausgewählten Gases in das in den Hohlleiter (2) eingeleitete Gasgemisch ist.

12. Apparat nach Anspruch 11, dadurch gekennzeichnet, daß der Wasserstoffgehalt des Gasgemisches 3 Volumenprozent nicht übersteigt.

13. Apparat nach Anspruch 11, dadurch gekennzeichnet, daß der Wasserdampfgehalt des in den Hohlleiter (2) eingeleiteten Gasgemisches 10.000 ppm nicht übersteigt.

14. Apparat nach einem der Ansprüche 9 bis 13, dadurch gekennzeichnet, daß das den Generator (1) speisende Gas (25) etwa 5 % Sauerstoff enthält.

15. Apparat nach eine der vorangehenden Ansprüche, dadurch gekennzeichnet, daß der Druck des den Generator (1) speisenden Gases (25) etwa 0,5 x 10⁵ Pa beträgt.

16. Apparat nach einem der Ansprüche 1 bis 14, dadurch gekennzeichnet, daß der Druck des den Generator (1) speisenden Gases (25) etwa 1 x 10⁵ Pa beträgt.

17. Apparat nach einem der vorangehenden Ansprüche, dadurch gekennzeichnet, daß er einen Rückführungskreislauf für das den Hohlleiter (2) verlassende Gas (17) und eine Vorrichtung (26) zum Abtrennen von CO₂ und Stickstoff umfaßt.

18. Apparat nach einem der vorangehenden Ansprüche zum Schneiden von Material, dadurch gekennzeichnet, daß er mit einer mehrere Windungen umfassenden, längselastischen Spiralleitung (28) verbunden ist, die in einem Fokussierkopf (29) endet.

## Claims

1. Mixing power laser apparatus, comprising a discharge generator (1) supplying a flow of excited nitrogen to a resonant cavity (5), and means (6; 19) interposed between the resonant cavity (5) and the outlet from the generator (1) for introducing a flow of CO₂ into the flow of excited nitrogen, characterised in that the generator (1) is of the corona cold electric discharge type functioning at a pressure greater than 0.3 x 10⁵ Pa and is coupled to the resonant cavity consisting of a waveguide (2) with mirrors (3, 4) facing each other along a principal direction of the waveguide.

2. Apparatus according to Claim 1, characterised in that the generator (1) comprises a tubular discharge chamber (11) having an axis (X) and with a circulation of gas which is transverse with respect to the axis (X).

3. Apparatus according to Claim 1 or Claim 2, characterised in that the principal direction of the waveguide (2) is parallel to the axis (X).

4. Apparatus according to Claim 3, characterised in that the CO₂ is introduced through at least one gas passage (18) parallel to the axis (X).

5. Apparatus according to one of Claims 2 to 4, characterised in that the waveguide (2) is in the shape of a curved channel with a large radius of curvature and having a principal direction substantially parallel to the axis (X).

6. Apparatus according to Claim 5, characterised in that the bottom of the channel (2) is arranged substantially parallel to the flow of the gas mixture in the passage (18).

7. Apparatus according to Claim 5, characterised in that the bottom of the channel (2) is arranged substantially perpendicular to the flow of the gas mixture in the passage (18).

8. Apparatus according to one of the preceding claims, characterised in that at least one of the mirrors (3; 4) comprises at least one diamond-shaped plate.

9. Apparatus according to one of the preceding claims, characterised in that the gas (25) supplying the generator (1) comprises at least 78% nitrogen.

10. Apparatus according to Claim 9, characterised in that the water vapour content in the gas (25) supplying the generator (1) does not exceed 5000 ppm.

11. Apparatus according to one of the preceding claims, characterised in that it includes means for introducing into the gas mixture supplied to the waveguide (2) a gas chosen from the group consisting of helium, hydrogen and water vapour.

12. Apparatus according to Claim 11, characterised in that the hydrogen content in the gas mixture does not exceed 3% by volume.

13. Apparatus according to Claim 11, characterised in that the water vapour content in the gas mixture supplied to the waveguide (2) does not exceed 10,000 ppm.

14. Apparatus according to one of Claims 9 to 13, characterised in that the gas (25) supplying the generator (1) comprises approximately 5% oxygen.

15. Apparatus according to one of the preceding claims, characterised in that the pressure of the gas (25) supplying the generator (1) is approximately 0.5 x 10⁵ Pa.

16. Apparatus according to one of Claims 1 to 14, characterised in that the pressure of the gas (25) supplying the generator (1) is approximately 1 x 10⁵ Pa.

17. Apparatus according to one of the preceding claims, characterised in that it comprises a circuit for recirculating the gas mixture leaving (17) the waveguide (2), and including a device (26) for separating CO₂ and nitrogen.

18. Apparatus according to one of the preceding claims, for cutting materials, characterised in that it is coupled to a multicoil whispering gallery (28) terminating in a focusing head (29).
